(19) **Europäisches Patentamt European Patent Office Office européen des brevets**

(11) **EP 4 606 621 A1**

(12) **EUROPEAN PATENT APPLICATION**

(43) Date of publication:
**27.08.2025 Bulletin 2025/35**

(21) Application number: **24223540.6**

(22) Date of filing: **27.12.2024**

(51) International Patent Classification (IPC):
**B60L 15/20** (2006.01)

(52) Cooperative Patent Classification (CPC):
**B60L 15/20;** B60L 2240/16; B60L 2240/423;
B60L 2250/26

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.02.2024 JP 2024023738**

(71) Applicant: **TOYOTA JIDOSHA KABUSHIKI
KAISHA
Aichi-ken, 471-8571 (JP)**

(72) Inventors:
• **ASAHARA, Norimi
TOYOTA-SHI, AICHI-KEN, 471-8571 (JP)**
• **FUJII, Kazuki
TOYOTA-SHI, AICHI-KEN, 471-8571 (JP)**
• **KANEKO, Satoshi
TOYOTA-SHI, AICHI-KEN, 471-8571 (JP)**

(74) Representative: **Cabinet Beau de Loménie
103, rue de Grenelle
75340 Paris Cedex 07 (FR)**

(54) **ELECTRIC VEHICLE**

(57) An electric vehicle (100) includes a storage device (103) storing a database, and processing circuitry (102). The processing circuitry (102) reads a target vehicle model corresponding to a target virtual vehicle selected by a driver from the database, and calculates a virtual acceleration rate of the target virtual vehicle by using the target vehicle model. When it is determined that the virtual acceleration rate exceeds a realizable acceleration rate of the electric vehicle (100) during an acceleration period of the electric vehicle (100) in which the accelerator pedal (22) is depressed, the processing circuitry (102) performs a correction process of correcting the virtual acceleration rate in such a manner as to reshape, according to an excess amount, changes over time in the virtual acceleration rate. The processing circuitry (102) controls the electric motor (2) in such a manner that an acceleration rate of the electric vehicle (100) becomes the corrected virtual acceleration rate.

FIG. 6

**Description**

1. Field of the Invention

The present disclosure relates to an electric vehicle including an electric motor as a drive source.

2. Description of Related Art

An electric motor can be controlled such as to output a desired motor torque, by controlling applied voltage or a field magnet. By utilizing such a fact, a technology is conceived in which various senses of driving are reproduced by an electric vehicle, by appropriately controlling the electric motor of the electric vehicle. For example, Japanese Patent No. 6787507 discloses a technology in which a sense of driving associated with a manual gear change operation on a manual transmission vehicle is reproduced by an electric vehicle in a simulated manner.

SUMMARY OF THE INVENTION

One of elements that characterize a sense of driving of each vehicle is a feel of acceleration of the vehicle responding to a driving operation. A feel of acceleration of a vehicle is an important point when a driver enjoys driving the vehicle. In particular, tastes in the feel of acceleration of a vehicle vary from driver to driver. In some cases, a driver may want to enjoy feels of acceleration of various vehicles according to his/her moods.

Accordingly, the inventors of the present disclosure have been considering a technology in which a virtual acceleration rate at a time when a virtual vehicle is driven is calculated by using a vehicle model, and an electric motor is controlled in such a manner that the calculated virtual acceleration rate is realized by an electric vehicle. A vehicle model can be given for each of a plurality of virtual vehicles. Accordingly, according to the technology, feels of acceleration of the plurality of virtual vehicles can be reproduced by a single electric vehicle in a simulated manner.

However, acceleration rates that can be realized by an electric vehicle naturally have a limit, in connection with a motor torque output characteristic of an electric motor of the electric vehicle. Accordingly, with regard to a virtual vehicle that has an acceleration characteristic exceeding an acceleration capability of the electric vehicle, there arises a situation in which the acceleration characteristic cannot be realized as it is by the electric vehicle. As a result, a problem arises that a feel of acceleration of such a virtual vehicle cannot be reproduced by the electric vehicle. On the other hand, raising the acceleration capability of the electric vehicle to make it possible to realize the acceleration characteristic of such a virtual vehicle unnecessarily increases costs of the electric vehicle.

The present disclosure provides an electric vehicle that, with regard to a virtual vehicle that has an acceleration characteristic exceeding an acceleration capability of the electric vehicle, allow a driver to experience an equivalent feel of acceleration to a feel of acceleration of the virtual vehicle.

An electric vehicle according to a first aspect of the present disclosure includes an electric motor as a drive source, an accelerator pedal, a storage device storing a database, and processing circuitry. The database is configured to manage a plurality of vehicle models created by modeling a plurality of virtual vehicles that differs in acceleration characteristic responding to a driving operation by a driver. The processing circuitry is configured to read a target vehicle model corresponding to a target virtual vehicle from the database. The target virtual vehicle is selected by the driver from among the plurality of virtual vehicles. The processing circuitry is configured to calculate a virtual acceleration rate of the target virtual vehicle responding to an operation of the accelerator pedal by using the target vehicle model, based on an operation state of the accelerator pedal and a traveling state of the electric vehicle. The processing circuitry is configured to determine whether or not the virtual acceleration rate exceeds a realizable acceleration rate of the electric vehicle during an acceleration period of the electric vehicle in which the accelerator pedal is depressed. The processing circuitry is configured to perform a correction process when it is determined that the virtual acceleration rate exceeds the realizable acceleration rate of the electric vehicle during the acceleration period. The correction process corrects the virtual acceleration rate in such a manner as to reshape, according to an excess amount, changes over time in the virtual acceleration rate during the acceleration period. The processing circuitry is configured to control the electric motor in such a manner that an acceleration rate of the electric vehicle becomes the corrected virtual acceleration rate.

In the electric vehicle according to the first aspect of the present disclosure, in the correction process, the processing circuitry may be configured to correct the virtual acceleration rate in such a manner that a jerk at a time when the virtual acceleration rate rises becomes larger than the jerk before the correction during the acceleration period.

In the electric vehicle according to the first aspect of the present disclosure, in the correction process, the processing circuitry may be configured to correct the virtual acceleration rate in such a manner that the virtual acceleration rate temporarily drops before the virtual acceleration rate rises during the acceleration period.

In the electric vehicle according to the first aspect of the present disclosure, in the correction process, the processing circuitry may be configured to correct the virtual acceleration rate in such a manner that a period before the virtual acceleration rate rises becomes shorter than the period before the correction during the acceleration period.

In the electric vehicle according to the first aspect of the present disclosure, the processing circuitry may be configured to calculate a target driving force for the electric vehicle such that the acceleration rate of the electric vehicle becomes the virtual acceleration rate. The processing circuitry may be configured to change motor torque output by the electric motor such that the target driving force is applied to the electric vehicle.

According to the present disclosure, when the virtual acceleration rate of the target virtual vehicle exceeds the realizable acceleration rate of the electric vehicle during the acceleration period of the electric vehicle in which the accelerator pedal is depressed, the virtual acceleration rate is corrected in such a manner that changes over time in the virtual acceleration rate during the acceleration period are reshaped according to an excess amount. Then, the electric motor is controlled in such a manner that the acceleration rate of the electric vehicle becomes the corrected virtual acceleration rate. Thus, it is possible to allow a driver to experience an equivalent feel of acceleration to a feel of acceleration of the virtual vehicle that has an acceleration characteristic exceeding an acceleration capability of the electric vehicle.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 shows a configuration of an electric vehicle according to an embodiment;

FIG. 2 is a tree diagram showing an example of inputs of selection that a Human Machine Interface (HMI) receives in respect of control modes for the electric vehicle according to the embodiment;

FIG. 3 shows an example of the functional configuration of a control device functioning as a motor control device;

FIG. 4 shows an example of an acceleration characteristic of the electric vehicle that is realized when the control mode is on-demand mode;

FIG. 5 shows an example of an acceleration characteristic of the electric vehicle that is usually realized when an acceleration characteristic of a target virtual vehicle exceeds an acceleration capability of the electric vehicle;

FIG. 6 shows an example of the functional configuration of an on-demand mode driving force calculation section shown in FIG. 3;

FIG. 7 is a flowchart showing a process flow of processes that are performed by a correction determination section shown in FIG. 6;

FIG. 8 shows an implementation example of a correction process according to a first specific example, which is performed by a correction section shown in FIG. 6;

FIG. 9 shows an implementation example of a correction process according to a second specific example, which is performed by the correction section shown in FIG. 6;

FIG. 10 shows an implementation example of a correction process according to a third specific example, which is performed by the correction section shown in FIG. 6;

FIG. 11 is a flowchart showing a process flow of processes that are performed by the on-demand mode driving force calculation section;

FIG. 12 shows an example of the configuration of a vehicle model; and

FIG. 13 shows an example of the functional configuration of the control device functioning as a sound control device.

DETAILED DESCRIPTION OF EMBODIMENTS

Hereinafter, embodiments of the present disclosure are described with reference to the drawings. Note that the same or corresponding parts are denoted by the same signs throughout the drawings, and description thereof is simplified or omitted.

1 Configuration of Power System of Electric Vehicle

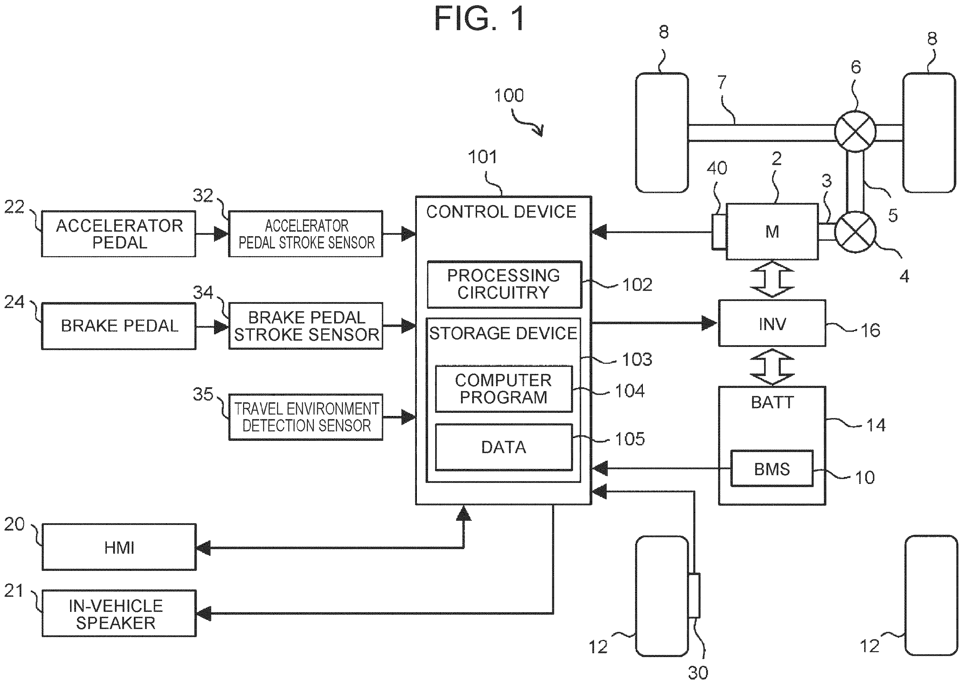

FIG. 1 schematically shows a configuration of an electric vehicle 100 according to an embodiment of the present disclosure. First, a configuration of a power system of the electric vehicle 100 is described with reference to FIG. 1.
The electric vehicle 100 includes an electric motor (M) 2 as a traction drive source. The electric motor 2 is, for example, a three-phase alternating-current motor. An output shaft 3 of the electric motor 2 is connected to one end of a propeller shaft 5 via a gearing system 4. The other end of the propeller shaft 5 is connected to a drive shaft 7 in the front of the vehicle via a differential gear 6.
The electric vehicle 100 includes drive wheels 8 that are front wheels and trailing wheels 12 that are rear wheels. The drive wheels 8 are provided on both ends of the drive shaft 7, respectively.
The electric vehicle 100 includes a battery (BATT) 14 and an inverter (INV) 16. The battery 14 stores electric energy for driving the electric motor 2. In other words, the electric vehicle 100 is a battery electric vehicle (BEV) that travels by using electric energy stored in the battery 14. The inverter 16 is, for example, a voltage inverter. The inverter 16 controls motor torque output by the electric motor 2 through PWM control.

2 Configuration of Control System of Electric Vehicle

Subsequently, a configuration of a control system of the electric vehicle 100 is described with reference to FIG. 1.
The electric vehicle 100 includes a vehicle speed sensor 30 for detecting vehicle speed. At least one of undepicted wheel speed sensors provided at the right and left front wheels 8 and the right and left rear wheels 12, respectively, is used for the vehicle speed sensor 30. The vehicle speed is one of the traveling states of the electric vehicle 100. The electric vehicle 100 may further include sensors for detecting other traveling states of the electric vehicle 100, such as yaw rate, pose, and surrounding environment.
The electric vehicle 100 includes an accelerator pedal stroke sensor 32. The accelerator pedal stroke sensor 32 is provided at an accelerator pedal 22 and outputs a signal indicating an operation state of the accelerator pedal 22. The operation states of the accelerator pedal include, typically, an accelerator operation amount and an accelerator operation speed. Moreover, the electric vehicle 100 includes a brake pedal stroke sensor 34. The brake pedal stroke sensor 34 is provided at a brake pedal 24 and outputs a signal indicating an operation state of the brake pedal 24. The operation states of the brake pedal 24 include, typically, a brake operation amount and a brake operation speed.
Each of the accelerator pedal 22 and the brake pedal 24 is one of driving operation members used to drive the electric vehicle 100. In addition, the electric vehicle 100 may also include various driving operation members, such as a steering wheel for driving related to steering.
The electric vehicle 100 includes a travel environment detection sensor 35. The travel environment detection sensor 35 is a sensor for detecting a travel environment around the electric vehicle 100. The travel environment detection sensor 35 is configured by using a camera, a radar, a LiDAR, a global navigation satellite system (GNSS) receiver, or the like.
The electric vehicle 100 includes a rotation speed sensor 40. The rotation speed sensor 40 is provided in the electric motor 2 and outputs a signal indicating a rotation speed of the electric motor 2.
The electric vehicle 100 includes a battery management system (BMS) 10. The battery management system 10 is a system that monitors the cell voltage, current, temperature, and the like of the battery 14. The battery management system 10 has a function of estimating a state of charge (SOC) of the battery 14.
The electric vehicle 100 includes a human machine interface (HMI) 20 and an in-vehicle speaker 21 as interfaces with a driver. The HMI 20 presents various information to the driver through display or sound and receives various inputs from the driver. The HMI 20 is configured by using a display (examples: multi-information display, cluster display), a switch, a touch pad, a speakerphone, a touch screen, or the like. For example, the HMI 20 displays various information on the display and receives an input in response to the displayed information from the driver through an operation of the switch. For example, the HMI 20 displays various information on the touch screen and receives an input in response to the displayed information from the driver through a touch operation on the touch screen. The in-vehicle speaker 21 is a sound generator that artificially generates sound in a vehicle cabin. The in-vehicle speaker 21, in particular, can generate pseudo-engine sound, which will be described later. The in-vehicle speaker 21 may be configured as part of the HMI 20.
The electric vehicle 100 includes a control device 101. The various sensors and equipment to be controlled that are mounted in the electric vehicle 100 are connected to the control device 101 via an in-vehicle network, such as a controller area network (CAN). In addition to the vehicle speed sensor 30, the accelerator pedal stroke sensor 32, the brake pedal stroke sensor 34, and the rotation speed sensor 40, other various sensors may be mounted in the electric vehicle 100 and connected to the control device 101 via the in-vehicle network.
The control device 101 generates a control signal related to various control of the electric vehicle 100, based on a signal acquired from each sensor. The control device 101 is, typically, an electronic control unit (ECU). The control device 101 may be a combination of a plurality of ECUs. The control device 101 includes at least processing circuitry 102 and a storage device 103.

The processing circuitry 102 executes various processes. The processing circuitry 102 is configured by using, for example, a general-purpose processor, an application-specific processor, a central processing unit (CPU), a graphics processing unit (GPU), an application-specific integrated circuit (ASIC), a field-programmable gate array (FPGA), an integrated circuit, a conventional circuit, or one or more combinations of any thereof. A processor including a transistor and other circuitry is an example of the processing circuitry 102. The processing circuitry 102 can also be referred to as circuitry. The circuitry is hardware programmed to implement functions described in the present disclosure, or hardware that executes the functions.

The storage device 103 stores various information that is necessary for the processing circuitry 102 to execute the processes. The storage device 103 is configured by using, for example, a recording medium such as a random access memory (RAM), a read only memory (ROM), a solid state drive (SSD), or a hard disk drive (HDD). The storage device 103 stores a computer program 104 that is executable by the processing circuitry 102 and various data 105. The computer program 104 includes a plurality of instructions that describes the processes to be executed by the processing circuitry 102. The computer program 104 may be recorded on a computer-readable recording medium. The functionality of the control device 101 is implemented through cooperation between the processing circuitry 102 that executes the computer program 104 and the storage device 103.

The control device 101 according to the present embodiment has at least two control modes, namely, ordinary mode and on-demand mode, in respect of control of the electric vehicle 100. Control of the electric vehicle 100 to be performed by the control device 101 changes according to a selected control mode. Hereinafter, the control modes for the electric vehicle 100 are described.

3 Control Modes for Electric Vehicle

As described above, the control modes for the electric vehicle 100 include at least two modes, namely, the ordinary mode and the on-demand mode. The ordinary mode is a control mode in which the electric vehicle 100 is driven as an ordinary BEV. When the ordinary mode is selected, the control device 101 controls the electric vehicle 100 in such a manner that the electric vehicle 100 operates as an ordinary BEV. In contrast, the on-demand mode is a control mode in which a feel of acceleration of a virtual vehicle selected by the driver (hereinafter, referred to as "target virtual vehicle") among a plurality of virtual vehicles is reproduced by the electric vehicle 100. When the on-demand mode is selected, the control device 101 controls the electric vehicle 100 in such a manner that the driver can get a feel of acceleration as if the driver drives the target virtual vehicle. Details of various control of the electric vehicle 100 in each of the ordinary mode and the on-demand mode will be described later.

In the on-demand mode, the plurality of virtual vehicles includes various vehicles that differ in acceleration characteristic responding to a driving operation by the driver. Each virtual vehicle may be intended to represent a real vehicle, or may be an imaginary vehicle that does not exist in actuality. In general, a difference in acceleration characteristic is derived from a difference in configuration of a powertrain from a drive source to drive wheels, or a difference in method of controlling the powertrain. Accordingly, it can also be thought that the plurality of virtual vehicles includes various vehicles that differ in at least one or some of the elements in the powertrain-related configuration or control method.

A control mode is selected by the driver operating the HMI 20. The HMI 20 is configured to receive an input of selection of a control mode from the driver. Moreover, in respect of the on-demand mode, the HMI 20 is configured to receive an input of selection of a target virtual vehicle from the driver.

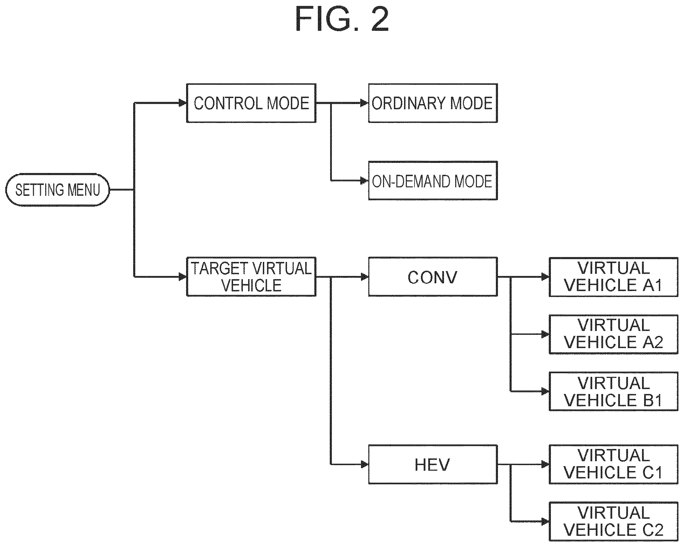

FIG. 2 is a tree diagram showing an example of inputs of selection that the HMI 20 receives. For example, via display on the display or the touch screen, the HMI 20 receives an input of selection from the driver as follows, according to the tree shown in FIG. 2.

First, the HMI 20 displays a setting menu screen on the display or the touch screen, according to an operation by the driver. An option of "control mode" and an option of "target virtual vehicle" are displayed in an initial screen of the setting menu screen. The option of "control mode" is an option for receiving an input of selection of a control mode from the driver. The option of "target virtual vehicle" is an option for receiving an input of selection of a target virtual vehicle from the driver.

When the option of "control mode" is selected, an option of "ordinary mode" and an option of "on-demand mode" are displayed next in the setting menu screen. When the option of "ordinary mode" is selected, the HMI 20 determines that the control mode for the electric vehicle 100 is the ordinary mode. When the option of "on-demand mode" is selected, the HMI 20 determines that the control mode for the electric vehicle 100 is the on-demand mode. Thus, the HMI 20 receives an input of selection of a control mode from the driver.

When the option of "on-demand mode" is selected, an option of "CONV" and an option of "HEV" are displayed next in the setting menu screen. Each of the option of "CONV" and the option of "HEV" represents a category of a plurality of virtual vehicles that can be selected in the on-demand mode. CONV is a category indicating conventional internal combustion engine vehicles (conventional vehicles). HEV is a category indicating hybrid electric vehicles. When the option of "CONV" is selected, an option of "virtual vehicle A1", an option of "virtual vehicle A2", and an option of "virtual vehicle B1" are displayed next in the setting menu screen. The virtual vehicle A1, the virtual vehicle A2, and the virtual vehicle B1 are virtual vehicles categorized as CONV among the plurality of selectable virtual vehicles. Similarly, when the option of "HEV" is selected, options of "virtual vehicle C1" and "virtual vehicle C2" are displayed next in the setting menu screen. The virtual vehicle C1 and the virtual vehicle C2 are virtual vehicles categorized as HEV among the plurality of selectable virtual vehicles. When any one of the options is selected, the HMI 20 determines that a corresponding virtual vehicle is the target virtual vehicle. For example, when the option of "virtual vehicle A2" is selected, the HMI 20 determines that the virtual vehicle A2 is the target virtual vehicle. Thus, the HMI 20 receives an input of selection of a target virtual vehicle from the driver.

In the description above, the categories of the plurality of virtual vehicles are an example, and the category-related options may be changed as appropriate. For example, category-related options may further include an option indicating plugin hybrid electric vehicles or fuel cell electric vehicles. Moreover, for example, category-related options may be options indicating other categories, such as categories related to types of mounted internal combustion engines (examples: supercharged straight-four engine, flat-six engine, V12 engine). Alternatively, when the option of "on-demand mode" is selected, virtual vehicle-related options may be displayed, without displaying category-related options.

Note that with regard to each option, a name displayed in the setting menu screen may be set as appropriate, with ease of understanding taken into consideration. For example, for each virtual vehicle-related option, a displayed name may be a more concrete name, such as a car model or a product name, from which the driver can easily image the virtual vehicle.

As described above, the driver can select a control mode by operating the HMI 20. The control device 101 controls the electric vehicle 100, according to the selected control mode.

In respect of control of the electric vehicle 100, the control device 101 according to the present embodiment functions as at least a motor control device that controls the electric motor 2 according to a driving operation by the driver. Specifically, the control device 101 functions as the motor control device by the processing circuitry 102 executing the computer program 104 for electric motor control stored in the storage device 103. The electric motor 2 is a drive source of the electric vehicle 100. Accordingly, it can also be said that the motor control device is a device that performs drive control of the electric vehicle 100. Hereinafter, control of the electric vehicle 100 by the motor control device is described.

4 Motor Control Device

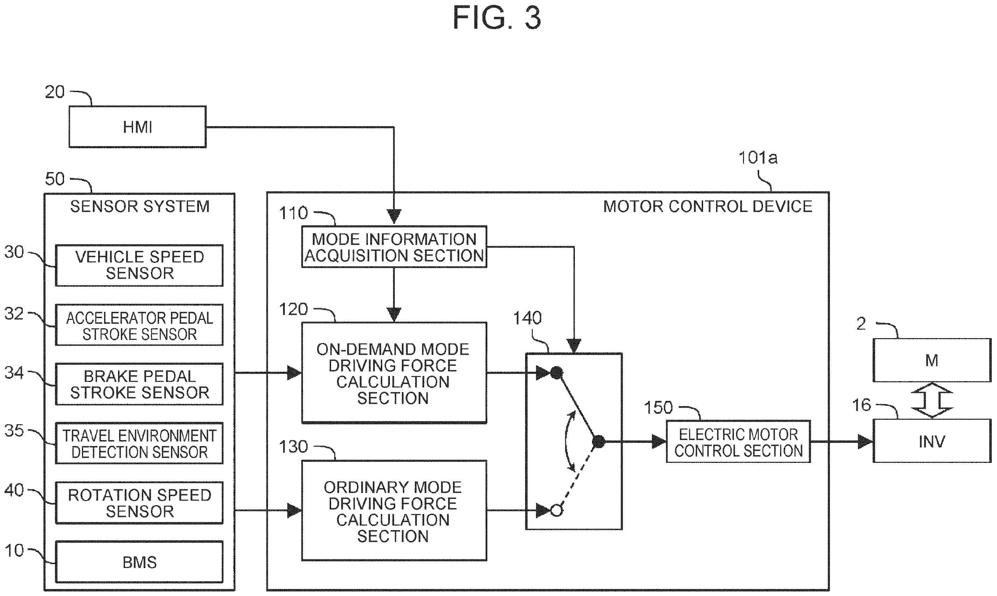

FIG. 3 shows an example of the functional configuration of the motor control device 101a. The motor control device 101a calculates a target driving force for the electric vehicle 100 according to a driving operation by the driver. The motor control device 101a controls the electric motor 2 via the inverter 16 in such a manner that the calculated target driving force is applied to the electric vehicle 100.

Signals from the HMI 20 and a sensor system 50 are input into the motor control device 101a. The sensor system 50 includes the vehicle speed sensor 30, the accelerator pedal stroke sensor 32, the brake pedal stroke sensor 34, the travel environment detection sensor 35, the rotation speed sensor 40, and the battery management system 10. The sensor system 50 may include other undepicted sensors. For example, the sensor system 50 may include a steering angle sensor for detecting the steering angle of the steering wheel, a yaw rate sensor for detecting the yaw rate of the electric vehicle 100, an inertial measurement unit (IMU) for detecting the pose of the electric vehicle 100, a sensor (examples: camera, radar, LiDAR) for detecting a surrounding environment around the electric vehicle 100, and the like.

The signals input from the HMI 20 into the motor control device 101a include a signal indicating a control mode selected by the driver and a signal indicating a target virtual vehicle selected by the driver. The signals input from the sensor system 50 into the motor control device 101a include a signal indicating a vehicle speed of the electric vehicle 100, a signal indicating the operation state of the accelerator pedal 22, a signal indicating the operation state of the brake pedal 24, a signal indicating a travel environment around the electric vehicle 100, a signal indicating a rotation speed of the electric motor 2, and a signal indicating a state (examples: cell voltage, current, temperature, SOC) of the battery 14.

The motor control device 101a includes, as functional blocks, a mode information acquisition section 110, an on-demand mode driving force calculation section 120, an ordinary mode driving force calculation section 130, a target driving force switching section 140, and an electric motor control section 150. The functional blocks are implemented by the processing circuitry 102 that executes the computer program 104 and the storage device 103 cooperating.

The mode information acquisition section 110 receives a signal from the HMI 20 and acquires information about which one of the ordinary mode and the on-demand mode is selected. The mode information acquisition section 110 acquires information on a target virtual vehicle selected by the driver. The mode information acquisition section 110 transmits information on the selected control mode to the target driving force switching section 140. The mode information acquisition section 110 transmits information on the selected target virtual vehicle to the on-demand mode driving force calculation section 120.

The on-demand mode driving force calculation section 120 acquires the information on the target virtual vehicle selected by the driver from the mode information acquisition section 110. The on-demand mode driving force calculation section 120 calculates a target driving force in the on-demand mode, based on signals from the sensor system 50. In other words, the on-demand mode driving force calculation section 120 calculates a target driving force for reproducing, with the electric vehicle 100, a feel of acceleration of the target virtual vehicle responding to a driving operation by the driver. Details of processes that are executed by the on-demand mode driving force calculation section 120 will be described later.

The ordinary mode driving force calculation section 130 calculates a target driving force in the ordinary mode, based on signals from the sensor system 50. In other words, the ordinary mode driving force calculation section 130 calculates a target driving force for causing the electric vehicle 100 to operate as an ordinary BEV. For example, the ordinary mode driving force calculation section 130 calculates the target driving force by using a map that has the accelerator operation amount of the accelerator pedal 22 and the rotation speed of the electric motor 2 as parameters. The ordinary mode driving force calculation section 130 may be configured to calculate the target driving force by further using the brake operation amount of the brake pedal 24 and the SOC of the battery 14 for parameters. However, in the present embodiment, processes that are executed by the ordinary mode driving force calculation section 130 are not particularly limited. For the processes that are executed by the ordinary mode driving force calculation section 130, any other preferable publicly known technology may be applied.

The target driving force switching section 140 switches the target driving force for the electric vehicle 100 to be used to control the electric motor 2, depending on a selected control mode. The target driving force switching section 140 acquires the information on the selected control mode from the mode information acquisition section 110. When the on-demand mode is selected, the target driving force switching section 140 transmits, as the target driving force for the electric vehicle 100, the target driving force calculated by the on-demand mode driving force calculation section 120 to the electric motor control section 150. When the ordinary mode is selected, the target driving force switching section 140 transmits, as the target driving force for the electric vehicle 100, the target driving force calculated by the ordinary mode driving force calculation section 130 to the electric motor control section 150.

Note that the ordinary mode driving force calculation section 130 may be configured not to execute the processes when the on-demand mode is selected. Similarly, the on-demand mode driving force calculation section 120 may be configured not to execute the processes when the ordinary mode is selected.

The target driving force for the electric vehicle 100 is input into the electric motor control section 150 via the target driving force switching section 140. In other words, when the on-demand mode is selected, the target driving force calculated by the on-demand mode driving force calculation section 120 is input into the electric motor control section 150. When the ordinary mode is selected, the target driving force calculated by the ordinary mode driving force calculation section 130 is input into the electric motor control section 150. The electric motor control section 150 changes motor torque to be output by the electric motor 2 such that the input target driving force is applied to the electric vehicle 100. More specifically, the electric motor control section 150 generates a control signal for the inverter 16 according to the input target driving force. The electric motor control section 150 changes the motor torque to be output by the electric motor 2 through PWM control by the inverter 16.

Thus, the motor control device 101a controls the electric motor 2 in such a manner that a target driving force according to a control mode is applied to the electric vehicle 100. Accordingly, according to the motor control device 101a, the acceleration characteristic of the electric vehicle 100, when the on-demand mode is selected, is an acceleration characteristic that simulates the acceleration characteristic of a target virtual vehicle selected by the driver. The acceleration characteristic of the electric vehicle 100, when the ordinary mode is selected, is the acceleration characteristic of an ordinary BEV.

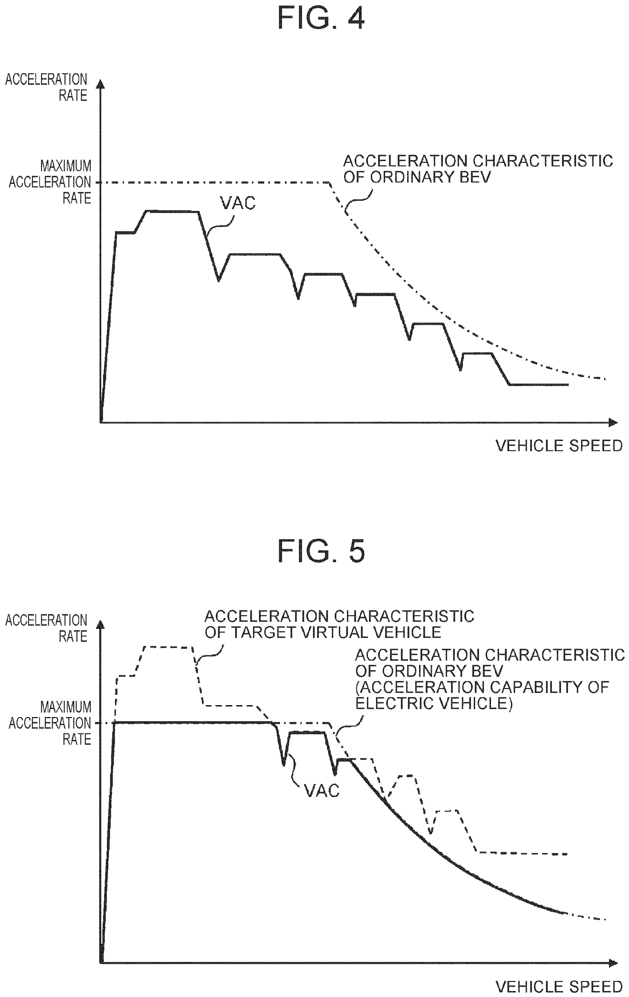

FIG. 4 shows an example of the acceleration characteristic VAC of the electric vehicle 100 when the on-demand mode is selected. For comparison, the acceleration characteristic of an ordinary BEV (dash-dotted line) is shown in FIG. 4. When the on-demand mode is selected, the acceleration characteristic VAC of the electric vehicle 100 varies as the target virtual vehicle is changed, to draw various patterns according to target virtual vehicles. The reason is that the target driving force calculated in the on-demand mode changes according to a target virtual vehicle selected by the driver. As a result, in the on-demand mode, the driver can enjoy feels of acceleration of various virtual vehicles with the electric vehicle 100.

Hereinafter, the calculation of the target driving force in the on-demand mode, that is, the processes that are executed by the on-demand mode driving force calculation section 120 are described in detail.

4.1 Calculation of Target Driving Force in On-demand Mode

The on-demand mode driving force calculation section 120 calculates the target driving force in such a manner that a feel of acceleration of a target virtual vehicle responding to a driving operation by the driver is reproduced by the electric vehicle 100. The on-demand mode driving force calculation section 120, in particular, adopts a scheme (hereinafter, referred to as "virtual acceleration rate-based scheme") in which a virtual acceleration rate at a time when the target virtual vehicle is driven is calculated (simulated) by using a vehicle model of the target virtual vehicle (hereinafter, referred to as "target vehicle model"), and the target driving force is calculated in such a manner that the acceleration rate of the electric vehicle 100 becomes the virtual acceleration rate.

Incidentally, the acceleration rates that can be realized by the electric vehicle 100, that is, the acceleration capability of the electric vehicle 100 naturally has a limit in connection with a motor torque output characteristic of the electric motor 2. The acceleration capability of the electric vehicle 100, in particular, is equivalent to the acceleration characteristic of an ordinary BEV. In other words, the acceleration characteristic that can be realized by the electric vehicle 100 comes within the scope of the acceleration characteristic of an ordinary BEV.

Accordingly, in the virtual acceleration rate-based scheme, there arises a situation in which the acceleration characteristic of a target virtual vehicle cannot be realized as it is by the electric vehicle 100 when the acceleration characteristic of the target virtual vehicle exceeds the acceleration capability of the electric vehicle 100. FIG. 5 shows an example of the acceleration characteristic VAC of the electric vehicle 100 that is realized when the acceleration characteristic of a target virtual vehicle exceeds the acceleration capability of the electric vehicle 100. In the example shown in FIG. 5, the acceleration characteristic VAC of the electric vehicle 100 cannot exactly replicate the acceleration characteristic of the target virtual vehicle (dashed line) due to the limit imposed by the acceleration capability of the electric vehicle 100 (dash-dotted line). Accordingly, in such a case, there is a possibility that an acceleration rate realized by the electric vehicle 100 in response to an operation of the accelerator pedal 22 is smaller than a virtual acceleration rate of the target virtual vehicle to be realized.

On the other hand, a feel of acceleration that the driver has when accelerating the electric vehicle 100 varies not only with the realized acceleration rate but also with the shape of a graphical representation of changes over time in acceleration rate after the accelerator pedal 22 is depressed. The feel of acceleration that the driver has can be made stronger compared to the realized acceleration rate by appropriately reshaping the changes over time in acceleration rate, based on such a cognitive characteristic of a driver about a feel of acceleration. For example, the larger a jerk is made at a time when the acceleration rate increases, the stronger the feel of acceleration the driver has.

Based on the point of view as described above, the on-demand mode driving force calculation section 120 according to the present embodiment is configured to allow the driver to experience an equivalent feel of acceleration to a feel of acceleration of a target virtual vehicle even when the acceleration characteristic of the target virtual vehicle exceeds the acceleration capability of the electric vehicle 100. In other words, the on-demand mode driving force calculation section 120 reshapes changes over time in realized acceleration rate in such a manner that the driver has a stronger feel of acceleration compared to a difference between the acceleration rate realized by the electric vehicle 100 and the virtual acceleration rate of the target virtual vehicle to be realized.

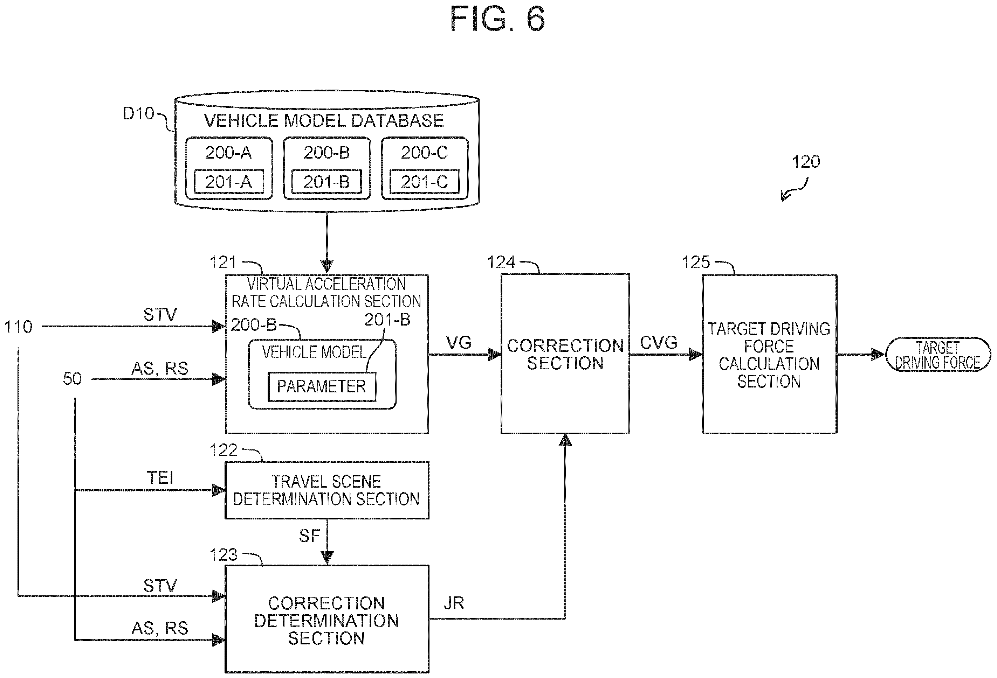

FIG. 6 shows an example of the functional configuration of the on-demand mode driving force calculation section 120. The on-demand mode driving force calculation section 120 includes, as functional blocks, a virtual acceleration rate calculation section 121, a travel scene determination section 122, a correction determination section 123, a correction section 124, and a target driving force calculation section 125. The on-demand mode driving force calculation section 120 is configured to be able to access a vehicle model database D10.

The vehicle model database D10 is a database that manages a plurality of vehicle models 200 created by modeling a plurality of virtual vehicles. The vehicle model database D10 may be implemented as the data 105 stored in the storage device 103. A new vehicle model 200 may be downloaded into the vehicle model database D10 as needed. In the example shown in FIG. 6, the vehicle model database D10 manages three vehicle models 200-A, 200-B, and 200-C. Each vehicle model 200 is a model that receives an operation state AS of the accelerator pedal 22 and a traveling state RS of the electric vehicle 100 as inputs and simulates a behavior of the virtual vehicle responding to a driving operation by the driver. Each vehicle model 200 is configured to be able to simulate at least a driving force that is applied to the virtual vehicle in response to a driving operation, particularly an operation of the accelerator pedal 22, and an acceleration or deceleration behavior of the virtual vehicle as a result of action of the driving force. A result of simulating the acceleration or deceleration behavior of the virtual vehicle by each vehicle model 200 includes a virtual acceleration rate of the virtual vehicle. In other words, each vehicle model 200 is configured to be able to calculate a virtual acceleration rate of the virtual vehicle responding to a driving operation by the driver.

Typically, each vehicle model 200 includes a control model that simulates a control system related to the powertrain of the virtual vehicle, and a plant model that simulates an acceleration or deceleration behavior of the virtual vehicle responding to a control signal from the control model. In such a case, the plant model includes a powertrain model that operates based on the control signal from the control model, and a model for simulating a behavior of the virtual vehicle as a result of action of virtual driving force output by the powertrain model. An example of the configuration of a vehicle model 200 will be described later.

Each vehicle model 200 has a parameter 201 related to the behavior of the virtual vehicle in simulation. Examples of the parameter 201 include vehicle weight, tire diameter, each gear ratio, engine maximum torque, engine torque responsiveness, gear change timing, and the like. The content of the parameter 201 may differ from vehicle model 200 to vehicle model 200. Each vehicle model 200, in combination with a set value of the parameter 201, represents a model of one virtual vehicle. For example, each virtual vehicle corresponds to a combination of a vehicle model 200 and a set value of the parameter 201, as shown in a table below. As shown in the table, the same vehicle models 200 may correspond to different virtual vehicles. Examples of such a case include a case in which powertrain systems are of the same type and the respective virtual vehicles can be rendered by changing the set value of the parameter 201.

[Table 1]

| Virtual vehicle | Vehicle model | Parameter |
|---|---|---|
| Virtual vehicle A1 | 200-A | Set value A1 |
| Virtual vehicle A2 | 200-A | Set value A2 |
| Virtual vehicle B1 | 200-B | Set value B1 |
| Virtual vehicle C1 | 200-C | Set value C1 |
| Virtual vehicle C2 | 200-C | Set value C2 |

The virtual acceleration rate calculation section 121 acquires information on a target virtual vehicle STV selected by the driver from the mode information acquisition section 110. The virtual acceleration rate calculation section 121 refers to the vehicle model database D10 and reads a vehicle model 200 (target vehicle model) corresponding to the target virtual vehicle STV. In the example shown in FIG. 6, a case is shown in which the virtual acceleration rate calculation section 121 reads the vehicle model 200-B. Further, the virtual acceleration rate calculation section 121 sets the parameter 201 of the read vehicle model 200 according to the target virtual vehicle STV. For example, when the target virtual vehicle STV is "virtual vehicle B1" in the table above, the virtual acceleration rate calculation section 121 sets a parameter 201-B of the vehicle model 200-B to a set value B1.

The virtual acceleration rate calculation section 121 calculates a virtual acceleration rate VG of the target virtual vehicle STV responding to an operation of the accelerator pedal 22, by using the read target vehicle model. More specifically, the virtual acceleration rate calculation section 121 receives signals from the sensor system 50, and acquires information on the operation state AS of the accelerator pedal 22 (example: the accelerator operation amount) and information on the traveling state RS of the electric vehicle 100 (example: a vehicle speed) to be used for inputs into the target vehicle model. In addition, the virtual acceleration rate calculation section 121 may acquire information on the operation state of the brake pedal 24, a steering angle of the steering wheel, a yaw rate of the electric vehicle 100, and the like, depending on the configuration of the target vehicle model. The virtual acceleration rate calculation section 121 inputs the acquired information into the target vehicle model. The virtual acceleration rate calculation section 121 calculates the virtual acceleration rate VG of the target virtual vehicle STV by simulating an acceleration or deceleration behavior of the target virtual vehicle STV by using the target vehicle model. The virtual acceleration rate VG calculated by the virtual acceleration rate calculation section 121 is transmitted to the correction section 124.

The travel scene determination section 122 acquires travel environment information TEI from the sensor system 50. The travel environment information TEI indicates information on a travel environment around the electric vehicle 100. The travel environment information TEI is, typically, information detected by the travel environment detection sensor 35. The travel environment information TEI may include map information around the electric vehicle 100, road traffic information, road shape information, and the like. The travel scene determination section 122 recognizes at least a travel environment in front of the electric vehicle 100, based on the travel environment information TEI. For example, the travel scene determination section 122 recognizes a situation of another vehicle in front, the curvature and the road width of a road extending frontward, the state of a traffic signal ahead, and the like.

Further, the travel scene determination section 122 determines a travel scene related to acceleration of the electric vehicle 100, based on the recognized travel environment. For example, the travel scene determination section 122 determines the travel scene for the electric vehicle 100, as to whether "a vehicle exists or not in front", "the road is a sharp curve or a straight road", "the road width is narrow or wide", "a traffic signal ahead is red or green", or the like.

The travel scene determination section 122 sets a scene determination flag SF to one or zero, according to the determined travel scene. More specifically, the travel scene determination section 122 sets the scene determination flag SF to one when the determined travel scene is expected to cause the driver to continue accelerating the electric vehicle 100 for a certain period. For example, the travel scene determination section 122 sets the scene determination flag SF to one when the determined travel scene is "no vehicle exists in front", "a straight road", "the road width is wide", "a traffic signal ahead is green", or the like. The travel scene determination section 122 sets the scene determination flag to zero when the determined travel scene is "a vehicle exists in front", "a sharp curve", "the road width is narrow", "a traffic signal ahead is red", or the like. The scene determination flag SF indicates whether or not it is preferable for the correction section 124 to correct the virtual acceleration rate VG in respect of the travel scene. The scene determination flag SF set by the travel scene determination section 122 is transmitted to the correction determination section 123.

The correction determination section 123 determines whether or not to perform correction of the virtual acceleration rate VG by the correction section 124, which will be described later, when the driver accelerates the electric vehicle 100 by depressing the accelerator pedal 22.

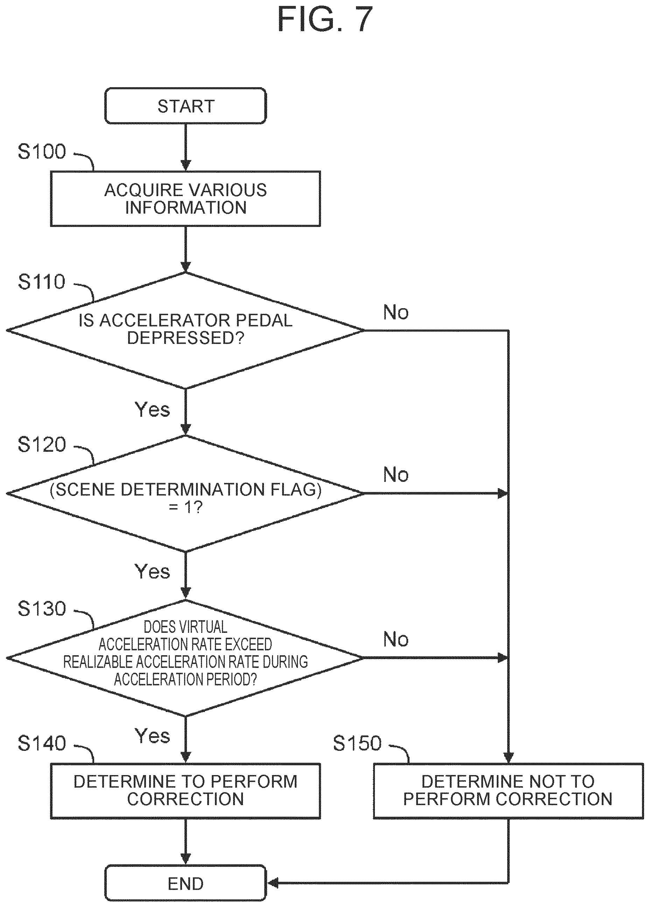

FIG. 7 is a flowchart showing a process flow of processes that are executed by the correction determination section 123.

In step S100, the correction determination section 123 acquires the information on the target virtual vehicle STV from the mode information acquisition section 110. The correction determination section 123 acquires, from the sensor system 50, the information on the operation state AS of the accelerator pedal 22 and the information on the traveling state RS of the electric vehicle 100. The correction determination section 123 acquires the scene determination flag SF from the travel scene determination section 122.

The correction determination section 123 manages an acceleration characteristic of each of a plurality of virtual vehicles that are selectable in the on-demand mode. The correction determination section 123 can refer to the acceleration characteristic of the target virtual vehicle STV, based on the information on the target virtual vehicle STV acquired from the mode information acquisition section 110. Moreover, the correction determination section 123 manages an acceleration characteristic of the electric vehicle 100 as an ordinary BEV (acceleration capability of the electric vehicle 100).

In step S110, the correction determination section 123 determines, from the operation state AS, whether or not the accelerator pedal 22 is depressed. For example, the correction determination section 123 determines that the accelerator pedal 22 is depressed when the accelerator operation amount and the amount of a change in accelerator operation amount are each equal to or more than predetermined threshold values.

When it is determined that the accelerator pedal 22 is depressed (step S110; Yes), the process moves to step S120. When it is determined that the accelerator pedal is not depressed (step S110; No), the correction determination section 123 determines not to perform correction (step S150), and terminates the processes.

In step S120, the correction determination section 123 determines whether or not the scene determination flag is one. When the scene determination flag is one (step S120; Yes), the process moves to step S130. When the scene determination flag is zero (step S120; No), the correction determination section 123 determines not to perform correction (step S150), and terminates the processes.

When the scene determination flag is zero, it is expected that even if the accelerator pedal 22 is depressed, the driver immediately undoes the operation of the accelerator pedal 22 in an attempt to stop accelerating the electric vehicle 100. The correction determination section 123 prevents the correction section 124 from performing correction of the virtual acceleration rate VG in such a case, through the process according to step S120. Thus, it is possible to restrain drivability from lowering due to correction of the virtual acceleration rate VG being unnecessarily performed.

In step S 130, the correction determination section 123 determines whether or not the virtual acceleration rate VG exceeds an acceleration rate (realizable acceleration rate) that can be realized by the electric vehicle 100 during an acceleration period in which the accelerator pedal 22 is depressed and the electric vehicle 100 accelerates. In other words, the correction determination section 123 determines whether or not an acceleration rate that is realized by the electric vehicle 100 in response to an operation of the accelerator pedal 22 is smaller than the to-be-realized virtual acceleration rate VG during the acceleration period.

The correction determination section 123 can acquire the realizable acceleration rate based on an accelerator operation amount and a vehicle speed by referring to the acceleration characteristic as an ordinary BEV. Moreover, by referring to the acceleration characteristic of the target virtual vehicle STV, the correction determination section 123 can determine, based on the accelerator operation amount and the vehicle speed, whether or not the virtual acceleration rate VG exceeds the realizable acceleration rate during the acceleration period.

When the virtual acceleration rate VG exceeds the realizable acceleration rate during the acceleration period (step S130; Yes), the correction determination section 123 determines to perform correction (step S140), and terminates the processes. When the virtual acceleration rate VG does not exceed the realizable acceleration rate during the acceleration period (step S130; No), the correction determination section 123 determines not to perform correction (step S150), and terminates the processes.

As described above, the correction determination section 123 executes the processes and determines whether or not to perform correction of the virtual acceleration rate VG by the correction section 124. FIG. 6 is referred to again. The correction determination section 123 transmits a determination result JR to the correction section 124. The determination result JR includes information on whether or not to perform correction. When it is determined to perform correction, the determination result JR further includes information on an excess amount by which the virtual acceleration rate VG exceeds the realizable acceleration rate during the acceleration period. The excess amount represents a difference between the acceleration rate that is realized by the electric vehicle 100 in response to the operation of the accelerator pedal 22 and the virtual acceleration rate VG.

The correction section 124 acquires the virtual acceleration rate VG from the virtual acceleration rate calculation section 121. In response to the determination result JR indicating to perform correction, the correction section 124 executes a correction process of correcting the virtual acceleration rate VG. In the correction process, the correction section 124 performs correction of the virtual acceleration rate VG in such a manner as to reshape changes over time in virtual acceleration rate VG during the acceleration period, according to the excess amount indicated by the determination result JR. The correction section 124 transmits, to the target driving force calculation section 125, a virtual acceleration rate CVG corrected as a result of the correction process being executed.

The correction process is executed in such a manner that a feel of acceleration that the driver has is made stronger to compensate for the excess amount, by reshaping changes over time in virtual acceleration rate VG during the acceleration period. For such a correction process, the following first to third specific examples can be adopted.

The first specific example of the correction process is to correct the virtual acceleration rate VG in such a manner that a jerk at a time when the virtual acceleration rate increases is made larger than before correction during the acceleration period. Such correction uses the cognitive characteristic of a driver that the larger a jerk is made at a time when the acceleration rate increases, the stronger the feel of acceleration the driver has.

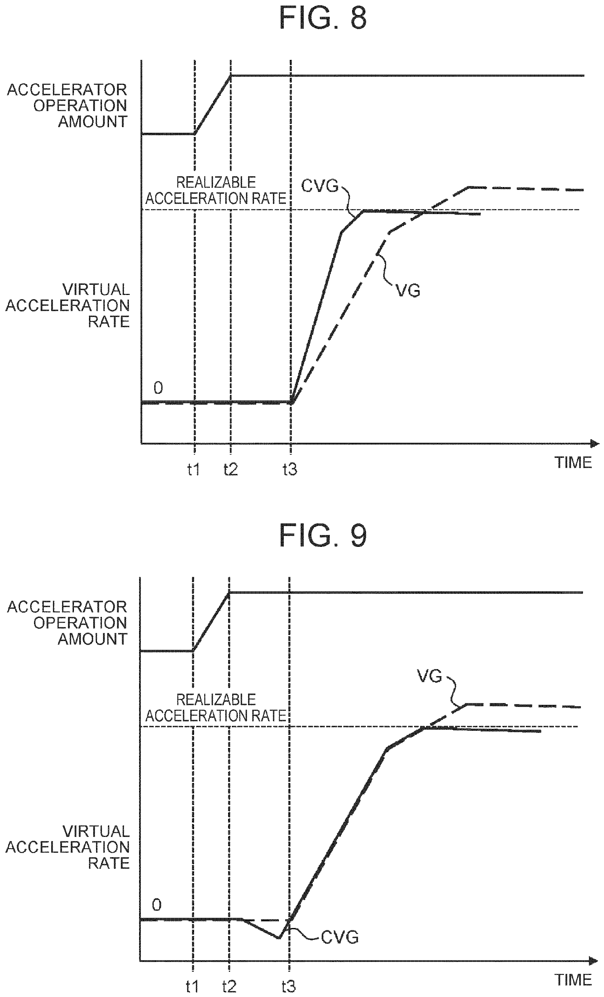

FIG. 8 shows an implementation example of the correction process according to the first specific example. FIG. 8 shows changes over time in accelerator operation amount, virtual acceleration rate VG, and corrected virtual acceleration rate CVG. In the example shown in FIG. 8, the accelerator pedal 22 is depressed during a period between time t1 and time t2. The virtual acceleration rate VG starts rising at time t3 and exceeds the realizable acceleration rate to reach a value corresponding to the accelerator operation amount. In contrast to such a virtual acceleration rate VG, the corrected virtual acceleration rate CVG does not exceed the realizable acceleration rate, but on the other hand, a jerk is larger at a time when the corrected virtual acceleration rate CVG rises. The correction process according to the first specific example corrects the virtual acceleration rate VG as shown in FIG. 8 and calculates the corrected virtual acceleration rate CVG. The correction process according to the first specific example may be configured to determine an extent to which the jerk is made larger according to the excess amount, in order to compensate for the excess amount. As described above, through the correction process according to the first specific example, the corrected virtual acceleration rate CVG realizes an equivalent feel of acceleration to a feel of acceleration realized by the virtual acceleration rate VG before correction.

The second specific example of the correction process is to correct the virtual acceleration rate VG in such a manner that the virtual acceleration rate temporarily drops before rising during the acceleration period. Such correction uses the cognitive characteristic of a driver that the larger the amount of a change in acceleration rate is, the stronger the feel of acceleration the driver has.

FIG. 9 shows an implementation example of the correction process according to the second specific example. In FIG. 9, changes over time in accelerator operation amount and virtual acceleration rate VG are similar to those in the case shown in FIG. 8. The corrected virtual acceleration rate CVG shown in FIG. 9, in contrast to the virtual acceleration rate VG, does not exceed the realizable acceleration rate but, on the other hand, temporarily drops before rising (during a period between time t2 and time t3). The correction process according to the second specific example corrects the virtual acceleration rate VG as shown in FIG. 9 and calculates the corrected virtual acceleration rate CVG. The correction process according to the second specific example may be configured to determine an extent to which the virtual acceleration rate is decreased according to the excess amount, in order to compensate for the excess amount. As described above, through the correction process according to the second specific example, the corrected virtual acceleration rate CVG realizes an equivalent feel of acceleration to a feel of acceleration realized by the virtual acceleration rate VG before correction.

The third specific example of the correction process is to correct the virtual acceleration rate VG in such a manner that a period before the virtual acceleration rate rises is made shorter than before correction during the acceleration period. Such correction uses the cognitive characteristic of a driver that the earlier the acceleration rate starts rising, the stronger feel of acceleration the driver has.

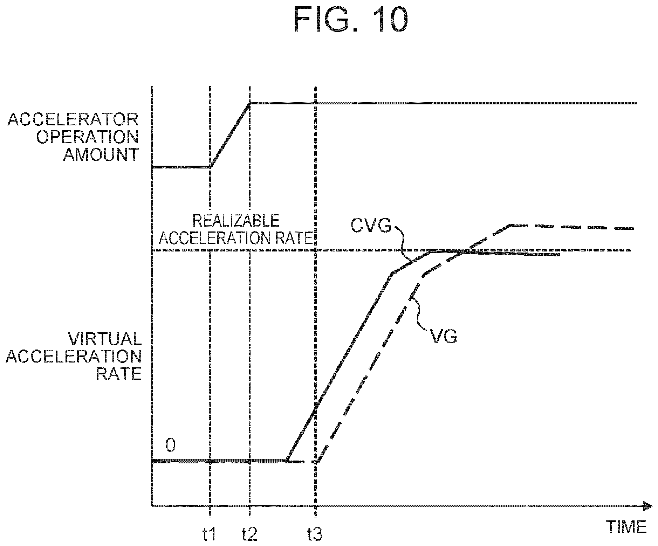

FIG. 10 shows an implementation example of the correction process according to the third specific example. In FIG. 10, changes over time in accelerator operation amount and virtual acceleration rate VG are similar to those in the case shown in FIG. 8. The corrected virtual acceleration rate CVG shown in FIG. 10, in contrast to the virtual acceleration rate VG, does not exceed the realizable acceleration rate but, on the other hand, has a shorter period before the corrected virtual acceleration rate CVG rises. The correction process according to the third specific example corrects the virtual acceleration rate VG as shown in FIG. 10 and calculates the corrected virtual acceleration rate CVG. The correction process according to the third specific example may be configured to determine a period of time before the virtual acceleration rate rises according to the excess amount, in order to compensate for the excess amount. As described above, through the correction process according to the third specific example, the corrected virtual acceleration rate CVG realizes an equivalent feel of acceleration to a feel of acceleration realized by the virtual acceleration rate VG before correction.

The first to third specific examples may be combined. For example, a correction process may be executed by combining the second specific example and the third specific example. In such a case, the correction process may be configured to determine each of an extent to which the virtual acceleration rate is decreased and a period of time before the virtual acceleration rate rises according to the excess amount.

As described above, the correction section 124 executes the correction process of correcting the virtual acceleration rate VG and transmits the corrected virtual acceleration rate CVG to the target driving force calculation section 125. Note that the correction section 124 does not execute the correction process when the determination result JR indicating not to perform correction is received. In such a case, the corrected virtual acceleration rate CVG is equal to the virtual acceleration rate VG before correction.

FIG. 6 is referred to again. The target driving force calculation section 125 acquires the corrected virtual acceleration rate CVG from the correction section 124 and calculates a target driving force for causing the acceleration rate of the electric vehicle 100 to be the virtual acceleration rate CVG. For example, the target driving force calculation section 125 transforms the virtual acceleration rate CVG into the target driving force $F_{veh}$ by using a simplified inverse model of the electric vehicle 100, as represented by the following expression. In the following expression, m is the vehicle weight of the electric vehicle 100, and $F_{load}$ is an actual travel resistance acting on the electric vehicle 100. The on-demand mode driving force calculation section 120 outputs the target driving force calculated by the target driving force calculation section 125.

$$F_{veh} = m * CVG - F_{load}$$

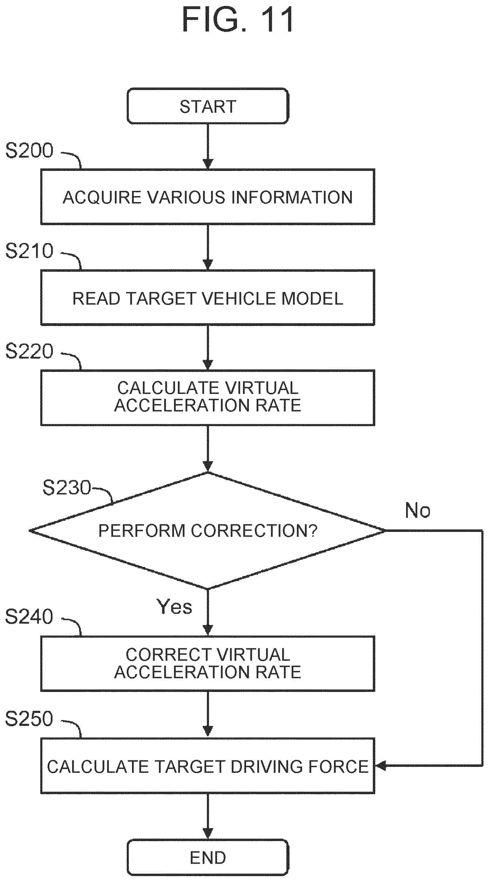

The functional configuration of the on-demand mode driving force calculation section 120 according to the present embodiment can be made as described above. FIG. 11 is a flowchart showing a process flow of processes that are performed by the on-demand mode driving force calculation section 120 based on the functional configuration. The process flow shown in FIG. 11 is repeatedly executed at predetermined process intervals.

In step S200, the on-demand mode driving force calculation section 120 acquires various information. For example, the on-demand mode driving force calculation section 120 acquires the information on the target virtual vehicle STV from the mode information acquisition section 110. The on-demand mode driving force calculation section 120 acquires the information on the operation state AS of the accelerator pedal 22 and the information on the traveling state RS of the electric vehicle 100 from the sensor system 50.

Next, in step S210, the on-demand mode driving force calculation section 120 refers to the vehicle model database D10 and reads a vehicle model 200 (target vehicle model) corresponding to the target virtual vehicle STV.

Next, in step S220, the on-demand mode driving force calculation section 120 calculates the virtual acceleration rate VG of the target virtual vehicle responding to an operation of the accelerator pedal 22, by using the target vehicle model.

Next, in step S230, the on-demand mode driving force calculation section 120 determines whether or not to perform correction of the virtual acceleration rate VG. It is determined by the correction determination section 123 whether or not to perform correction. When correction is performed (step S230; Yes), the virtual acceleration rate VG is corrected (step S240), and thereafter the process moves to step S250. When correction is not performed (step S230; No), the process moves to step S250, without the virtual acceleration rate VG being corrected.

Next, in step S250, the on-demand mode driving force calculation section 120 calculates a target driving force for causing the acceleration rate of the electric vehicle 100 to be the virtual acceleration rate CVG. Thereafter, the current processes are terminated.

As described above, according to the present embodiment, when the virtual acceleration rate VG exceeds the realizable acceleration rate of the electric vehicle 100 during the acceleration period of the electric vehicle 100, the virtual acceleration rate VG is corrected in such a manner that changes over time in virtual acceleration rate VG during the acceleration period are reshaped according to the excess amount. The corrected virtual acceleration rate CVG realizes an equivalent feel of acceleration to a feel of acceleration realized by the virtual acceleration rate VG before correction. According to the present embodiment, the target driving force for causing the acceleration rate of the electric vehicle 100 to be the virtual acceleration rate CVG is calculated. Thus, even when the acceleration characteristic of a target virtual vehicle exceeds the acceleration capability of the electric vehicle 100, it is possible to allow the driver to experience an equivalent feel of acceleration to a feel of acceleration of the target virtual vehicle. Moreover, it is possible to increase virtual vehicle variations of which a feel of acceleration can be reproduced in the on-demand mode, and hence to enhance the degree of user satisfaction.

4.1.2 Example of Configuration of Vehicle Model

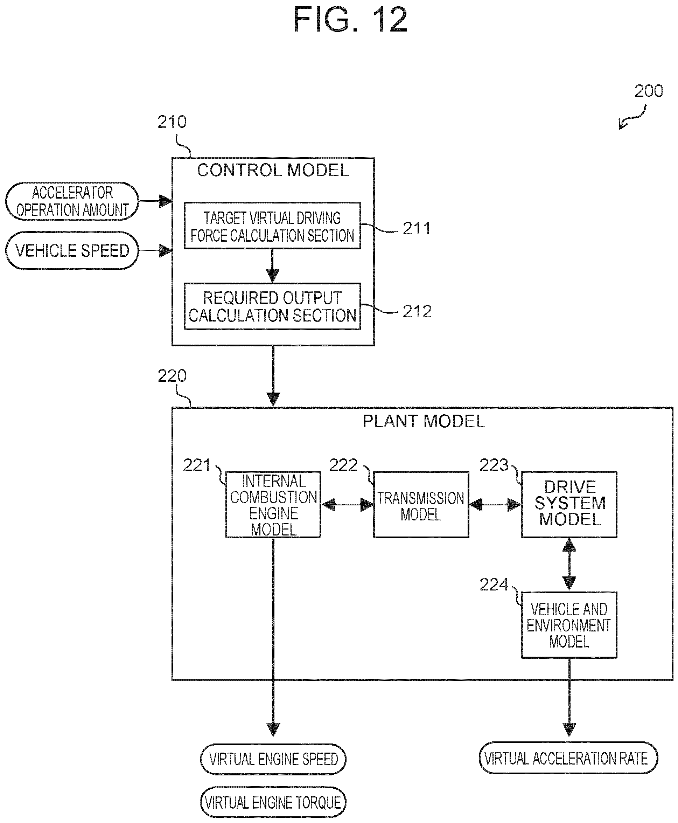

Here, an example of the configuration of a vehicle model 200 managed by the vehicle model database D10 is described. FIG. 12 shows an example of the configuration of a vehicle model 200. The vehicle model 200 includes a control model 210 and a plant model 220. The control model 210 simulates a control system related to the powertrain of the virtual vehicle. The plant model 220 simulates an acceleration or deceleration behavior of the virtual vehicle according to a control signal from the control model 210. The plant model 220 includes a powertrain model that operates based on a control signal from the control model 210, and a model for simulating a behavior of the virtual vehicle as a result of action of virtual driving force output by the powertrain model. The control model 210 can also simulate a control system that calculates a required output to the powertrain of the virtual vehicle. The plant model 220 can also simulate a physical restriction on the required output to the powertrain.

Note that the respective specifications of the control model 210 and the plant model 220 differ from type to type of a powertrain system. For example, the configurations of a control system, a transmission, and a drive system differ between CONV and HEV. Accordingly, a vehicle model 200 for CONV and a vehicle model 200 for HEV have mutually different specifications for both the control model 210 and the plant model 220. In the example shown in FIG. 12, a case is particularly shown in which the virtual vehicle is an automatic transmission vehicle (AT vehicle) that includes an internal combustion engine.

The control model 210 includes a target virtual driving force calculation section 211 and a required output calculation section 212. The target virtual driving force calculation section 211 calculates a virtual driving force (target virtual driving force) required at output of the powertrain of the virtual vehicle, based on an accelerator operation amount and a vehicle speed. For example, the target virtual driving force calculation section 211 performs the calculation by using a map that gives a target virtual driving force to a combination of an accelerator operation amount and a vehicle speed. The required output calculation section 212 calculates a required output of the powertrain such that the calculated target virtual driving force is satisfied. The calculated required output includes a target engine torque of the internal combustion engine and a target gear stage of the transmission. The control model 210 transmits the calculated required output to the plant model 220.

The plant model 220 includes an internal combustion engine model 221, a transmission model 222, a drive system model 223, and a vehicle and environment model 224. The internal combustion engine model 221, the transmission model 222, and the drive system model 223 are models for the powertrain from the drive source up to the drive wheels. The vehicle and environment model 224 is a model for simulating a behavior of the virtual vehicle as a result of action of the virtual driving force output by the powertrain model.

The internal combustion engine model 221 is a model of the internal combustion engine of the virtual vehicle. For example, the internal combustion engine model 221 simulates an operation of the internal combustion engine responding to an input of the target engine torque. The internal combustion engine model 221 outputs a virtual engine speed and a virtual engine torque. In the internal combustion engine model 221, parameters 201 that can be changed according to a target virtual vehicle are, for example, engine maximum torque, engine torque responsiveness, and the like.

The transmission model 222 is a model of the transmission of the virtual vehicle. For example, the transmission model 222 simulates an operation of the transmission responding to an input of the target gear stage. The transmission model 222 outputs a virtual transmission output torque, based on a gear ratio that is determined by the virtual engine torque output by the internal combustion engine model 221 and the virtual gear stage. The transmission model 222 includes a stepped transmission model, which simulates a stepped transmission, and a continuously variable transmission model, which simulates a continuously variable transmission. One of the stepped transmission model and the continuously variable transmission model is selected according to the target virtual vehicle. In the transmission model 222, parameters 201 that can be changed according to a target virtual vehicle are, for example, each gear ratio, gear change timing, and the like. In the case of the stepped transmission model, each gear ratio means a gear ratio at each gear stage.

The drive system model 223 is a model of the drive system of the virtual vehicle. For example, in the drive system model 223, a mechanical structure from the transmission to the drive wheels is modeled. The drive system model 223 calculates a drive wheel torque by using the virtual transmission output torque output by the transmission model 222 and a predetermined reduction ratio, and outputs a virtual driving force for the virtual vehicle. In the drive system model 223, parameters 201 that can be changed according to a target virtual vehicle are, for example, reduction ratio, propeller shaft maximum allowable torque, and the like.

The vehicle and environment model 224 is a model representing a mechanical characteristic of the virtual vehicle and a travel environment around the virtual vehicle. The vehicle and environment model 224 calculates a travel resistance acting on the virtual vehicle, based on the travel environment around the virtual vehicle. The vehicle and environment model 224 then simulates acceleration or deceleration behavior of the virtual vehicle, based on the virtual driving force output from the drive system model 223, the calculated travel resistance, and the mechanical characteristic of the virtual vehicle. The vehicle and environment model 224 outputs a virtual acceleration rate, based on the acceleration or deceleration behavior of the virtual vehicle. In the vehicle and environment model 224, parameters 201 that can be changed according to a target virtual vehicle are, for example, vehicle weight, tire diameter, CD value, and the like.

Each vehicle model 200 can be configured as described above. The vehicle model 200 shown in FIG. 4 is an example. In a vehicle model 200, part of a model can be configured more minutely, depending on an event desired to be emphasized. For example, a case is considered in which a shock or a response is desired to be emphasized that accompanies a change in engagement between a gear of the transmission and a clutch at a time of kickdown. In such a case, the transmission model 222 may be configured to reproduce details, such as the planetary, Ravigneaux, or other gearing system of the transmission, inertia of each constituent element, and a change in transmission path between when the clutch is engaged and when the clutch is not engaged. When a computational load on a vehicle model 200 is desired to be lightened, the transmission model 222 may be simply configured to reproduce only gear ratios.

5 Sound Control Device

The control device 101 according to the present embodiment may function as a sound control device that, in respect of control of the electric vehicle 100, controls the in-vehicle speaker 21 in such a manner that a pseudo-engine sound according to a target virtual vehicle is output. More specifically, the control device 101 functions as the sound control device by the processing circuitry 102 executing the computer program 104 for in-vehicle speaker control stored in the storage device 103. Hereinafter, control of the electric vehicle 100 by the sound control device is described.

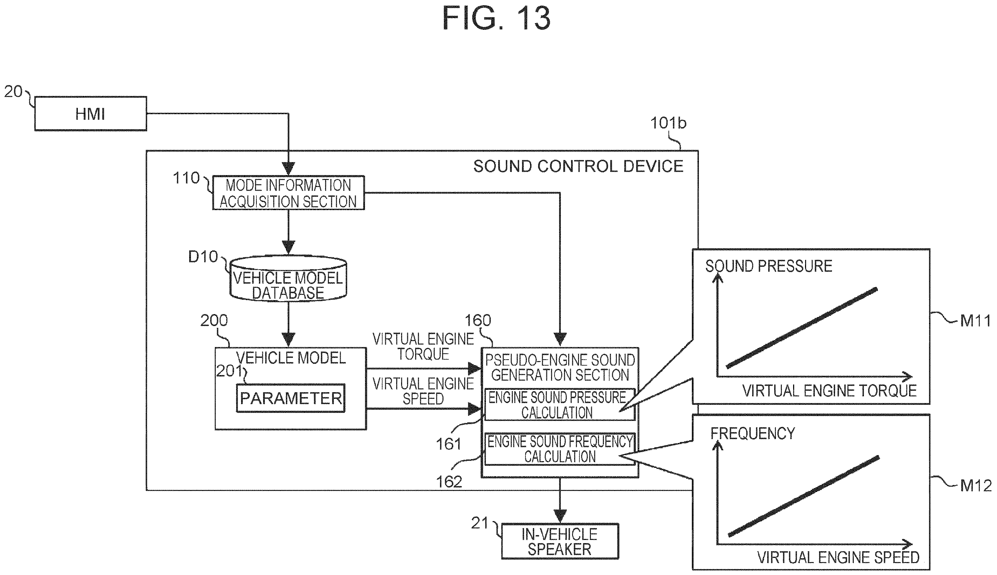

FIG. 13 shows a functional configuration of the sound control device 101b. The sound control device 101b causes the in-vehicle speaker 21 to produce a pseudo-engine sound that imitates an engine sound of a virtual vehicle including an internal combustion engine.

The mode information acquisition section 110 transmits information on a selected control mode and information on a target virtual vehicle to a pseudo-engine sound generation section 160.

The pseudo-engine sound generation section 160 functions when the control mode is the on-demand mode and when the target virtual vehicle is a virtual vehicle including an internal combustion engine. At the time, in the sound control device 101b, a vehicle model 200 (target vehicle model) corresponding to the target virtual vehicle is read from the vehicle model database D10, based on the information on the target virtual vehicle from the mode information acquisition section 110. A parameter 201 is set according to the target virtual vehicle. The pseudo-engine sound generation section 160 generates pseudo-engine sound, based on a virtual engine torque and a virtual engine speed calculated by using the target vehicle model.

The pseudo-engine sound generation section 160 refers to the storage device 103 and acquires a sound source of the pseudo-engine sound related to the target virtual vehicle. A sound source of a pseudo-engine sound related to each virtual vehicle including an internal combustion engine may be stored in the storage device 103.

The pseudo-engine sound generation section 160 includes a process 161 of calculating an engine sound pressure and a process 162 of calculating an engine sound frequency. In the process 161, the sound pressure of the pseudo-engine sound is calculated from the virtual engine torque by using a sound pressure map M11. The sound pressure map M11 is created in such a manner that the larger the virtual engine torque is, the larger the sound pressure is. In the process 162, the frequency of the virtual engine sound is calculated from the virtual engine speed by using a frequency map M12. The frequency map M12 is created in such a manner that the larger the virtual engine speed is, the higher the frequency is. The virtual engine torque and the virtual engine speed change according to an operation of a driving operation member by the driver.

The sound control device 101b outputs the pseudo-engine sound generated by the pseudo-engine sound generation section 160 from the in-vehicle speaker 21. Sound control related to pseudo-engine sound is performed by the sound control device 101b as described above, whereby when the control mode is the on-demand mode, it is possible to provide the driver further with a sense of reality, as if the driver drives the target virtual vehicle.

6 Display Control Device

When the control mode is the on-demand mode, the control device 101 according to the present embodiment may function as a display control device that controls the HMI 20 in such a manner that a virtual engine speed and a virtual gear stage of the target virtual vehicle are displayed. Thus, it is possible to provide the driver further with a sense of reality, as if the driver drives the target virtual vehicle.

7 Others

The electric vehicle 100 according to the embodiment is an FF vehicle with the single electric motor 2 that drives the front wheels. However, the technical characteristics of the embodiment can also be applied to an electric vehicle with two electric motors that are laid at the front and the rear and drive the front wheels and the rear wheels, respectively. Moreover, application is also possible to an electric vehicle that includes an in-wheel motor in each wheel.

The technical characteristics of the embodiment are not only applied to battery electric vehicles, but can also be applied widely to electric vehicles that use an electric motor for a traction power unit. For example, the technical characteristics of the embodiment can be applied to hybrid battery electric vehicles (HEVs) or plug-in hybrid battery electric vehicles (PHEVs) that have a mode in which the vehicle travels only with the driving force of an electric motor. Moreover, application is also possible to fuel cell electric vehicles (FCEVs) in which electric energy generated by a fuel cell is supplied to an electric motor.

**Claims**

1. An electric vehicle (100) comprising:

an electric motor (2) as a drive source;
an accelerator pedal (22);
a storage device (103) storing a database, the database being configured to manage a plurality of vehicle models created by modeling a plurality of virtual vehicles that differs in acceleration characteristic responding to a driving operation by a driver; and
processing circuitry (102) configured to:

read a target vehicle model corresponding to a target virtual vehicle from the database, the target virtual vehicle being selected by the driver from among the plurality of virtual vehicles;
calculate a virtual acceleration rate of the target virtual vehicle responding to an operation of the accelerator pedal (22) by using the target vehicle model, based on an operation state of the accelerator pedal (22) and a traveling state of the electric vehicle (100);
determine whether or not the virtual acceleration rate exceeds a realizable acceleration rate of the electric vehicle (100) during an acceleration period of the electric vehicle (100) in which the accelerator pedal (22) is depressed;
perform a correction process when it is determined that the virtual acceleration rate exceeds the realizable acceleration rate of the electric vehicle (100) during the acceleration period, the correction process correcting the virtual acceleration rate in such a manner as to reshape, according to an excess amount, changes over time in the virtual acceleration rate during the acceleration period; and
control the electric motor (2) in such a manner that an acceleration rate of the electric vehicle (100) becomes the corrected virtual acceleration rate.

2. The electric vehicle (100) according to claim 1, wherein in the correction process, the processing circuitry (102) is configured to correct the virtual acceleration rate in such a manner that a jerk at a time when the virtual acceleration rate rises becomes larger than the jerk before the correction during the acceleration period.

3. The electric vehicle (100) according to claim 1, wherein in the correction process, the processing circuitry (102) is configured to correct the virtual acceleration rate in such a manner that the virtual acceleration rate temporarily drops before the virtual acceleration rate rises during the acceleration period.

4. The electric vehicle (100) according to claim 1, wherein in the correction process, the processing circuitry (102) is configured to correct the virtual acceleration rate in such a manner that a period before the virtual acceleration rate rises becomes shorter than the period before the correction during the acceleration period.

5. The electric vehicle (100) according to any one of claims 1 to 4, wherein the processing circuitry (102) is configured to: calculate a target driving force for the electric vehicle (100) such that the acceleration rate of the electric vehicle (100) becomes the virtual acceleration rate; and change motor torque output by the electric motor (2) such that the target driving force is applied to the electric vehicle (100).

# FIG. 1

EP 4 606 621 A1

# FIG. 2

# FIG. 3

20 — HMI

50 — SENSOR SYSTEM

30 — VEHICLE SPEED SENSOR

32 — ACCELERATOR PEDAL STROKE SENSOR

34 — BRAKE PEDAL STROKE SENSOR

35 — TRAVEL ENVIRONMENT DETECTION SENSOR

40 — ROTATION SPEED SENSOR

10 — BMS

101a — MOTOR CONTROL DEVICE

110 — MODE INFORMATION ACQUISITION SECTION

120 — ON-DEMAND MODE DRIVING FORCE CALCULATION SECTION

130 — ORDINARY MODE DRIVING FORCE CALCULATION SECTION

140

150 — ELECTRIC MOTOR CONTROL SECTION

2 — M

16 — INV

EP 4 606 621 A1

18

# FIG. 4

ACCELERATION
RATE

MAXIMUM
ACCELERATION
RATE

ACCELERATION CHARACTERISTIC
OF ORDINARY BEV

VAC

VEHICLE SPEED

# FIG. 5

ACCELERATION
RATE

ACCELERATION CHARACTERISTIC
OF TARGET VIRTUAL VEHICLE

ACCELERATION CHARACTERISTIC
OF ORDINARY BEV
(ACCELERATION CAPABILITY OF
ELECTRIC VEHICLE)

MAXIMUM
ACCELERATION
RATE

VAC

VEHICLE SPEED

19

# FIG. 6

# FIG. 7

```
                    ┌──────────────┐
                    │    START     │
                    └──────┬───────┘
                           │
                           ▼
S100 ──────────┌──────────────────────┐
               │   ACQUIRE VARIOUS     │
               │     INFORMATION       │
               └──────────┬───────────┘
                          │
                          ▼
S110 ──────────◇──────────────────────◇────── No ──┐
               │  IS ACCELERATOR PEDAL │           │
               │      DEPRESSED?       │           │
               ◇──────────────────────◇           │
                          │                        │
                         Yes                       │
                          ▼                        │
S120 ──────────◇──────────────────────◇────── No ──┤
               │ (SCENE DETERMINATION  │           │
               │       FLAG) = 1?      │           │
               ◇──────────────────────◇           │
                          │                        │
                         Yes                       │
                          ▼                        │
S130 ──────────◇──────────────────────◇────── No ──┤
               │    DOES VIRTUAL       │           │
               │ ACCELERATION RATE     │           │
               │ EXCEED REALIZABLE     │           │
               │ ACCELERATION RATE     │           │
               │ DURING ACCELERATION   │           │
               │      PERIOD?          │           │
               ◇──────────────────────◇           │
                          │                        │
                         Yes                       │
                          ▼                        ▼
S140 ──┌──────────────────┐   S150 ──┌──────────────────┐
       │  DETERMINE TO     │          │ DETERMINE NOT TO  │
       │    PERFORM        │          │ PERFORM CORRECTION│
       │   CORRECTION      │          └─────────┬────────┘
       └─────────┬────────┘                     │
                 │                              │
                 ▼                              │
          ┌──────────────┐ ◄────────────────────┘
          │     END      │
          └──────────────┘
```

# FIG. 8

# FIG. 9

# FIG. 10

# FIG. 11

START

S200 — ACQUIRE VARIOUS INFORMATION

S210 — READ TARGET VEHICLE MODEL

S220 — CALCULATE VIRTUAL ACCELERATION RATE

S230 — PERFORM CORRECTION?

No

Yes

S240 — CORRECT VIRTUAL ACCELERATION RATE

S250 — CALCULATE TARGET DRIVING FORCE

END

# FIG. 12

200

210

## CONTROL MODEL

ACCELERATOR OPERATION AMOUNT →

VEHICLE SPEED →

TARGET VIRTUAL DRIVING FORCE CALCULATION SECTION — 211

REQUIRED OUTPUT CALCULATION SECTION — 212

220

## PLANT MODEL

221 INTERNAL COMBUSTION ENGINE MODEL ↔ 222 TRANSMISSION MODEL ↔ 223 DRIVE SYSTEM MODEL

224 VEHICLE AND ENVIRONMENT MODEL

VIRTUAL ENGINE SPEED

VIRTUAL ENGINE TORQUE

VIRTUAL ACCELERATION RATE

# FIG. 13

Europäisches
Patentamt

European
Patent Office

Office européen
des brevets

## EUROPEAN SEARCH REPORT

**Application Number**

EP 24 22 3540

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/322094 A1 (VAN NUS WARREN [US]) 12 October 2023 (2023-10-12) * paragraphs [0039], [0047], [0049], [0050], [0060] - [0063], [0068], [0081]; figures 4, 8-10 * | 1-5 | INV. B60L15/20 |
| | ----- | | |
| A | US 2019/118815 A1 (JORDAN III DALE F [US] ET AL) 25 April 2019 (2019-04-25) * paragraphs [0019] - [0026] * | 1-5 | |
| | ----- | | |

**TECHNICAL FIELDS SEARCHED (IPC)**

B60L

The present search report has been drawn up for all claims

| Place of search | Date of completion of the search | Examiner |
|---|---|---|
| The Hague | 4 July 2025 | Bellatalla, Filippo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 3540

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2025

| Patent document cited in search report | Publication date | Patent family member(s) | | Publication date |
|---|---|---|---|---|
| US 2023322094 A1 | 12-10-2023 | EP | 4496726 A1 | 29-01-2025 |
| | | JP | 2025509474 A | 11-04-2025 |
| | | US | 2023322094 A1 | 12-10-2023 |
| | | WO | 2023183849 A1 | 28-09-2023 |
| US 2019118815 A1 | 25-04-2019 | CN | 109697915 A | 30-04-2019 |
| | | DE | 102018125906 A1 | 25-04-2019 |
| | | US | 2019118815 A1 | 25-04-2019 |

EPO FORM P0459

For more details about this annex : see Official Journal of the European Patent Office, No. 12/82

**EP 4 606 621 A1**